# DEMANDE DE BREVET EUROPEEN

(11) **EP 1 426 218 A1**
(43) Date de publication de la demande: **09.06.2004**
(21) Numéro de dépôt: 03293046.3
(22) Date de dépôt: 05.12.2003
(51) Int. Cl.: B60J 5/04, B60J 10/08

(54) **Porte de véhicule**

(30) Priorité: 06.12.2002 FR 0215459
(71) Demandeur: Peugeot Citroen Automobiles, 78943 Vélizy Villacoublay Cédex (FR)
(72) Inventeur: Arnould, Etienne, 25200 Bethoncourt (FR)
(74) Mandataire: De Cuenca, Emmanuel Jaime

(57) **Abrégé**

L'invention concerne un porte de véhicule comportant dans son volume intérieur une zone (2) dite "humide" et une zone (3) dite "sèche" séparées par une doublure (4), un dispositif fonctionnel tel qu'une serrure comprenant un mécanisme et un organe de commande du mécanisme disposés respectivement en zone (2) humide et en zone (3) sèche, le mécanisme et l'organe de commande étant reliés par au moins un câble (7) traversant la doublure (4) de porte, des premiers moyens d'étanchéité disposés au niveau de la portion de câble située à la frontière (8) entre la zone (2) humide et la zone (3) sèche, et des seconds moyens d'étanchéité constitués d'une feuille étanche collée sur la doublure de porte pour boucher une ou plusieurs ouvertures (11), caractérisée en ce que les premiers moyens d'étanchéité sont constitués d'un joint (10) sensiblement cylindrique enfilé sur le câble (7) et disposé dans une découpe formée sur la bordure d'une ouverture (12) de la doublure (4).

## Description

L'invention se rapporte à une porte de véhicule.

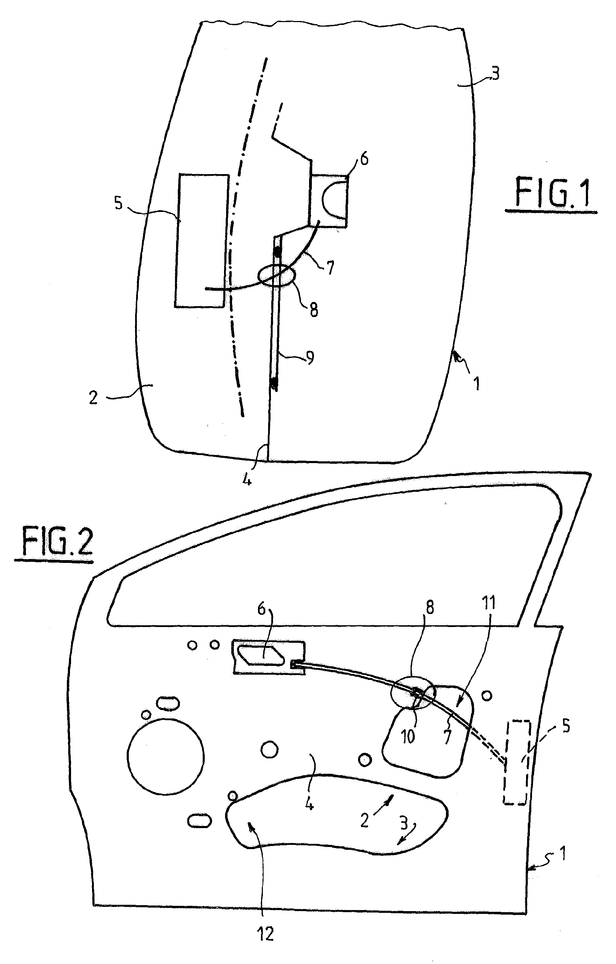

Comme représenté à la figure 1, une porte 1 de véhicule comporte classiquement, dans son volume intérieur, une zone 2 dite "humide" (située du côté extérieur au véhicule) et une zone 3 dite "sèche" (située du côté intérieur au véhicule). Ces deux zones 2, 3 sont séparées par une doublure 4 qui comprend des ouvertures destinées, par exemple, au passage ou au montage de différents organes. Les moyens d'étanchéité entre la zone sèche 3 et la zone humide 2 comportent en général une feuille 9 étanche collée sur la doublure 4 de porte.

La porte 1 contient par ailleurs de nombreux dispositifs fonctionnels et notamment une serrure 5, 6. La serrure comprend classiquement un mécanisme 5 de verrouillage et un organe 6 de commande du mécanisme qui sont situés respectivement en zone 2 humide et en zone 3 sèche. Le mécanisme 5 et l'organe 6 de commande sont reliés par au moins un câble 7 traversant la doublure 4 de porte.

Le passage d'un câble 7 à travers la doublure 4 de porte nécessite des moyens d'étanchéité supplémentaires interposés au niveau de la portion de câble 7 située à la frontière 8 entre la zone 2 humide et la zone 3 sèche.

Un dispositif d'étanchéité connu consiste à coller une mousse sur la doublure de porte à l'endroit où le câble franchit la barrière d'étanchéité. Le câble, qui passe au travers d'une ouverture de la doublure, est logé dans la mousse et la feuille d'étanchéité est collée sur cette mousse.

Cependant, cette solution pose de nombreux problèmes. Outre l'opération supplémentaire de collage de la mousse lors du montage, il est nécessaire en plus, pour s'assurer que le câble passe correctement dans la mousse, de prévoir des points de bridage du câble à proximité de la mousse. De plus, la mousse a tendance à s'user lors de la vie du véhicule en raison des mouvements du câble lors de l'utilisation de la serrure. Ceci nuit la qualité de l'étanchéité.

Dans une autre solution connue, le câble traverse la doublure par un trou et l'étanchéité au niveau du trou est assurée par un "passe-gaine", c'est-à-dire un manchon enfilé sur le câble et destiné à s'interposer entre le câble et la bordure de l'orifice du trou.

Cette solution présente également de nombreux inconvénients. En particulier, le montage de l'ensemble est rendu difficile puisqu'il faut d'abord engager l'extrémité du câble dans le trou, puis mettre en place la serrure dans la porte et la visser, puis reprendre l'extrémité du câble et la tirer à travers le trou, et enfin chausser le passe-gaine sur le câble.

De plus, le passage du câble et de son passe-gaine au travers d'un trou dans la doublure oriente la câble avec un angle d'environ 45° par rapport au plan de la doublure. Cet angle d'incidence important augmente les risques de contact du câble avec les autres éléments contenus dans la porte tels que la vitre ou le garnissage. La réduction de l'angle d'incidence du câble par rapport à la doublure ne peut pas être obtenue en augmentant la longueur du câble car une trop grande longueur de câble n'est pas acceptable pour le bon fonctionnement de la serrure.

Un but de la présente invention est pallier tout ou partie des inconvénients de l'art antérieur relevés ci-dessus.

A cette fin, l'invention a pour objet une porte de véhicule comportant dans son volume intérieur une zone dite "humide" et une zone dite "sèche" séparées par une doublure, un dispositif fonctionnel tel qu'une serrure comprenant un mécanisme et un organe de commande du mécanisme disposés respectivement en zone humide et en zone sèche, le mécanisme et l'organe de commande étant reliés par au moins un câble traversant la doublure de porte, des premiers moyens d'étanchéité disposés au niveau de la portion de câble située à la frontière entre la zone humide et la zone sèche, et des seconds moyens d'étanchéité constitués d'une feuille étanche collée sur la doublure de porte pour boucher une ou plusieurs ouvertures.

L'invention, par ailleurs conforme à la définition générique qu'en donne le préambule ci-dessus, est essentiellement caractérisée en ce que les premiers moyens d'étanchéité sont constitués d'un joint sensiblement cylindrique enfilé sur le câble et disposé dans une découpe formée sur la bordure d'une ouverture de la doublure.

Par ailleurs, l'invention peut comporter l'une ou plusieurs des caractéristiques suivantes :
- le joint comporte une face sensiblement plane, le cordon de colle de la feuille étanche sur la doublure passant sur la face sensiblement plane du joint,
- le joint est fixé par déformation élastique sur la bordure de la découpe,
- le joint comporte sur sa surface extérieure une rainure décrivant une courbe non fermée et ayant sensiblement la forme d'un U, la rainure étant formée par une paire de lèvres élastiques destinées à accueillir la bordure de la découpe,
- la découpe est formée dans une portion de la doublure sensiblement parallèle au plan de la doublure, le joint étant conformé pour guider la câble à la frontière entre la zone humide et la zone sèche, de façon que l'angle entre l'axe du câble et le plan de la doublure n'excède pas 30°, et de préférence n'excède pas 20°,
- le joint est constitué d'un matériau du type caoutchouc.

D'autres particularités et avantages apparaîtront à la lecture de la description ci-après, faite en référence aux figures dans lesquelles :
- la figure 1 représente une vue en coupe et schématique d'une partie d'une porte de véhicule, et selon un plan sensiblement perpendiculaire au plan de la porte,
- la figure 2 représente une porte de véhicule selon l'invention, vue du côté intérieur au véhicule,
- la figure 3 représente une vue en perspective d'un détail de la porte de la figure 2, illustrant les moyens assurant l'étanchéité de la doublure au niveau du passage d'un câble du mécanisme d'ouverture de la porte,
- la figure 4 représente une vue en perspective d'un détail de la figure 3, illustrant une découpe dans la doublure de la porte,
- la figure 5 représente une vue en agrandie d'un détail de la porte de la figure 2, illustrant les moyens assurant l'étanchéité de la doublure au niveau du passage du câble du mécanisme d'ouverture,
- les figures 6, 7 et 8 représentent des sections de détails de la figure 5 selon respectivement les lignes AA, BB, et CC.

Un mode de réalisation préféré de l'invention va à présent être décrit en se référant aux figures 2 à 8. Par soucis de simplification et de concision, les éléments identiques à ceux décrits ci-dessus en référence à la figure 1 sont désignés dans la suite de la description par les mêmes références numériques et ne sont pas détaillés à nouveau.

La porte 1 représentée partiellement à la figure 2 comprend un organe 6 de commande manuelle de la serrure de la porte situé dans la zone 3 dite "sèche" du véhicule. L'organe 6 de commande, constitué d'un levier pivotant, est relié par un câble 7 au mécanisme 5 de serrure situé de l'autre côté de la doublure 4 (en zone 2 "humide").

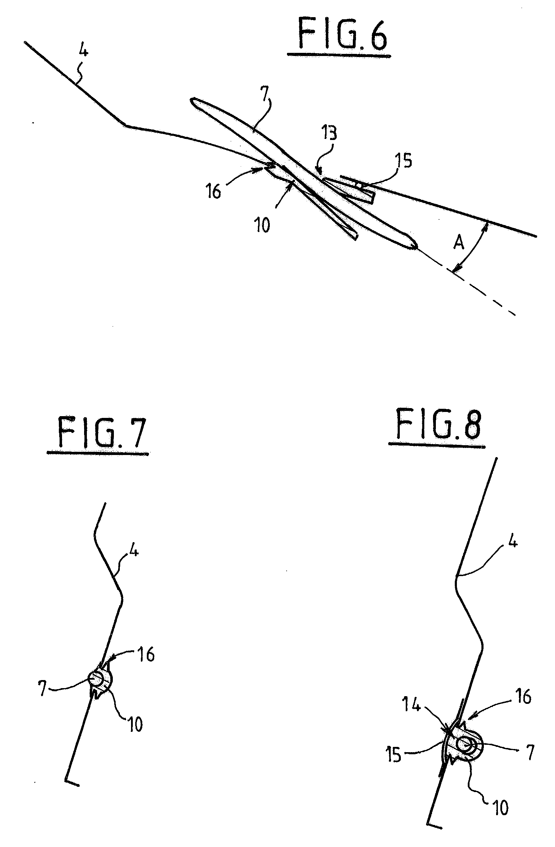

Les moyens d'étanchéité disposés au niveau de la portion de câble située à la frontière 8 entre la zone 2 humide et la zone 3 sèche sont constitués selon l'invention d'un joint 10 sensiblement cylindrique enfilé sur le câble 7 et disposé dans une découpe 13 formée sur la bordure d'une ouverture 12 de la doublure 4 (cf. notamment figures 5 à 7).

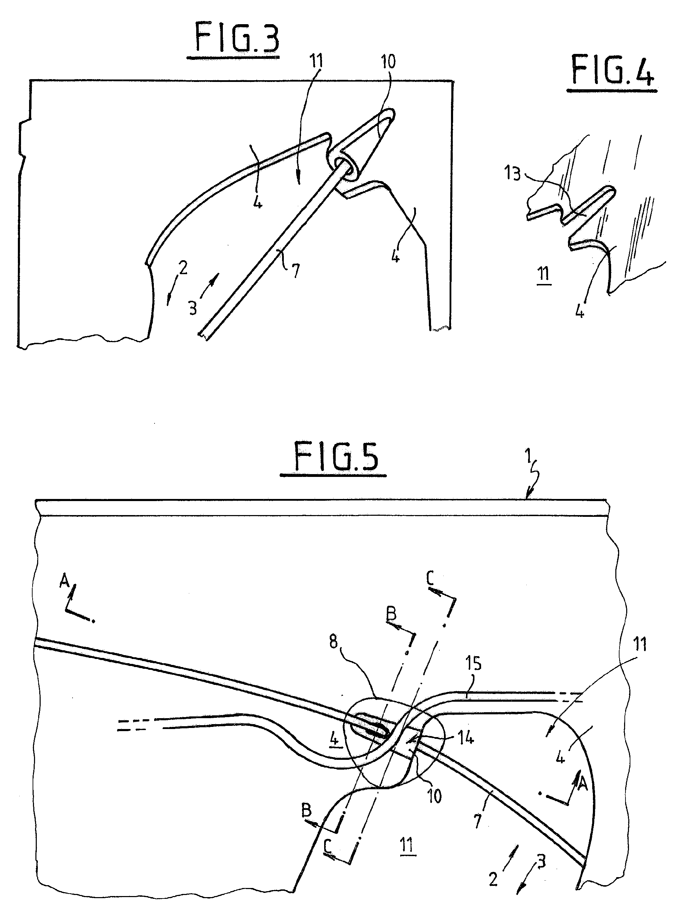

De préférence, le joint 10 a une forme oblongue sensiblement cylindrique. Ainsi, la découpe 13, qui est formée sur un bord d'une ouverture 12 de la doublure 4 pour accueillir le joint 10, a également une forme oblongue (cf. notamment figure 4).

Avantageusement, le joint 10 peut être fixé dans la découpe 13 par déformation élastique du joint sur la bordure de la découpe 13. A cet effet, le joint 10 peut être constitué d'un matériau du type caoutchouc.

Ainsi, le joint 10 peut comporter sur sa surface extérieure une rainure décrivant une courbe non fermée et ayant sensiblement la forme d'un U (c'est-à-dire la forme de la découpe 13). La rainure destinée au montage du joint 10 peut être formée par une paire 16 de lèvres élastiques destinées à accueillir la bordure de la découpe 13 (cf. figures 7 et 8).

Avantageusement, la découpe 13 est formée dans une portion de la doublure sensiblement parallèle au plan de la doublure 4. De plus, le joint 10 est conformé pour guider la câble 7 à la frontière 8 entre la zone 2 humide et la zone 3 sèche, de façon que l'angle A entre l'axe du câble 7 et le plan de la doublure 4 n'excède pas 30°, et de préférence n'excède pas 20° (cf. figures 3 et 6).

Le joint 10 peut également comporter une face 14 sensiblement plane, de cette façon, le cordon 15 de colle destiné à fixer la feuille 9 étanche sur la doublure 4 peut passer sur cette face 14 plane du joint 10. La face 14 plane est de préférence située du côté sec de la doublure 4 (cf. figure 5).

Ainsi, on conçoit aisément que tout en étant de structure simple et peu coûteuse, l'invention résout les problèmes de l'art antérieur. En particulier, le joint 10 d'étanchéité selon l'invention peut être monté facilement par un opérateur et ne nécessite pas de pièce supplémentaire et notamment pas de système de bridage du câble. Par ailleurs, le joint 10 et son logement 13 dans la doublure assurent un guidage du câble 7 lui conférant un angle d'incidence faible par rapport à la doublure 4 de porte.

De plus, le passage du cordon de colle 15 sur le joint 10 garantie un meilleur maintien du joint 10 mais surtout améliore encore l'étanchéité de l'ensemble (joint 10 et feuille 9) au niveau du passage du câble 7.

## Revendications

1. Porte de véhicule comportant dans son volume intérieur une zone (2) dite "humide" et une zone (3) dite "sèche" séparées par une doublure (4), un dispositif fonctionnel tel qu'une serrure comprenant un mécanisme (5) et un organe (6) de commande du mécanisme disposés respectivement en zone (2) humide et en zone (3) sèche, le mécanisme (5) et l'organe (6) de commande étant reliés par au moins un câble (7) traversant la doublure (4) de porte, des premiers moyens d'étanchéité disposés au niveau de la portion de câble située à la frontière (8) entre la zone (2) humide et la zone (3) sèche, et des seconds moyens d'étanchéité constitués d'une feuille (9) étanche collée sur la doublure (4) de porte pour boucher une ou plusieurs ouvertures (11, 12), **caractérisée en ce que** les premiers moyens d'étanchéité sont constitués d'un joint (10) sensiblement cylindrique enfilé sur le câble (7) et disposé dans une découpe (13) formée sur la bordure d'une ouverture (12) de la doublure (4).

2. Porte selon la revendication 1, **caractérisée en ce que** le joint (10) comporte une face (14) sensiblement plane, et **en ce que** le cordon (15) de colle de la feuille (9) étanche sur la doublure (4) passe sur la face (14) sensiblement plane du joint (10).

3. Porte selon la revendication 1 ou 2, **caractérisée en ce que** le joint (10) est fixé par déformation élastique sur la bordure de la découpe (13).

4. Porte selon la revendication 3, **caractérisée en ce que** le joint (10) comporte sur sa surface extérieure une rainure décrivant une courbe non fermée et ayant sensiblement la forme d'un U, la rainure étant formée par une paire (16) de lèvres élastiques destinées à accueillir la bordure de la découpe (13).

5. Porte selon l'une quelconque des revendications 1 à 4, **caractérisée en ce que** la découpe (13) est formée dans une portion de la doublure sensiblement parallèle au plan de la doublure (4), et **en ce que** le joint (10) est conformé pour guider la câble (7) à la frontière (8) entre la zone (2) humide et la zone (3) sèche, de façon que l'angle (A) entre l'axe du câble (7) et le plan de la doublure (4) n'excède pas 30°, et de préférence n'excède pas 20°.

6. Porte selon l'une quelconque des revendications 1 à 5, **caractérisée en ce que** le joint (10) est constitué d'un matériau du type caoutchouc.
